# EUROPEAN PATENT SPECIFICATION

(11) **EP 3 348 137 B1**
(45) Date of publication and mention of the grant of the patent: **04.09.2019**
(21) Application number: 17151202.3
(22) Date of filing: 12.01.2017
(51) Int. Cl.: A01G 5/00

(54) **ASSEMBLY FOR PROCESSING CUT FLOWERS**
ANORDNUNG ZUM BEHANDELN VON SCHNITTBLUMEN
ENSEMBLE DE MANUTENTION DE FLEURS COUPÉES

(43) Date of publication of application: 18.07.2018
(73) Proprietor: Bercomex B.V., 1624 PB Hoorn (NL)
(72) Inventor: MIEDEMA, Willibrordus Jaring, 1778 KN Westerland (NL)
(74) Representative: De Vries & Metman

(56) References cited:
- EP-A1- 1 621 061
- IL-A- 171 969
- NL-C1- 1 006 410
- NL-C2- 1 009 000
- US-A1- 2011 099 965

## Description

The invention relates to an assembly for transferring cut flowers from cultivation beds towards a processing unit. Such an assembly is known from NL 1 006 410.

Generally cut flowers (such as, for example, chrysanthemums) are cultivated on cultivation beds in greenhouses. In some state of the art greenhouses a main belt conveyor extends between the cultivation beds towards a processing unit (for example a processing unit for cutting to size, defoliating, bundling and wrapping the cut flowers). An auxiliary belt conveyor is placed along a cultivation bed of which the cut flowers are to be harvested (or picked) and employees deposit harvested cut flowers (which may be picked manually or by a picking/harvesting apparatus) on top of such an auxiliary belt conveyor which, in turn, deposits the cut flowers on the main conveyor. Such a process not only involves high personnel cost, but also yields a discontinuous supply of cut flowers to the processing unit (of which, as a result, the capacity cannot be utilised in an optimal manner) because the auxiliary belt conveyor has to be relocated to a next cultivation bed when a previous cultivation bed has been picked completely, thus interrupting the picking process.

In view of the above it is an object of the present invention to provide an improved assembly of the above type.

In accordance with the present invention such an assembly is characterized as set forth in claim 1.

Using such an assembly a continuous supply of cut flowers to the processing unit may be assured. The harvesting (or picking/cutting) apparatus may proceed with harvesting and the harvested cut flowers are buffered in its (first) buffer. Using the transfer vehicle the cut flowers then can be transferred to the transportation vehicle which (by means of a transportation unit) transfers the cut flowers to the (second) buffer from which the processing unit may retrieve flowers (whether or not inclusive the transportation unit) when needed. The transportation vehicle also will transfer empty transportation units from the second buffer back to the location where it meets the transfer vehicle.

The first buffer allows the harvesting apparatus to continue with harvesting when the transfer vehicle is transferring cut flowers to the transportation vehicle and has not yet returned empty at the harvesting apparatus. The second buffer allows a continuous operation of the processing unit, also when the harvesting apparatus (and thus the corresponding transfer vehicle) is relocated to a next cultivation bed and a temporary disruption of the supply of cut flowers by the transportation vehicle(s) occurs.

In one embodiment of the assembly according to the invention, each transfer vehicle is adapted for transferring the cut flowers by means of a transportation unit, wherein the harvesting apparatus is adapted for receiving the transportation unit and wherein the first buffer of the harvesting apparatus and the holding means of the transportation units are adapted for buffering and holding, respectively, the cut flowers in a corresponding pattern.

A transportation unit may be placed (received) in the harvesting apparatus and, due to the said corresponding patterns, may easily and swiftly take over the cut flowers from the first buffer. Then the transportation unit is taken over by the transfer vehicle which transfers it (with the cut flowers) to the transportation vehicle. Likewise the transfer vehicle can receive an empty transportation unit from a transportation vehicle for transferring it to the harvesting apparatus.

In one embodiment according to the invention, the holding means of the transportation units comprise a number of pairs of opposed, cooperating grippers which are movable between a holding position for there between holding a cut flower and a release position for there between receiving a cut flower or for releasing a previously held cut flower.

The movement of the grippers may be caused by a drive which is integrated into the transportation unit and/or a component such as the harvesting apparatus and/or transfer vehicle and/or transportation vehicle. It is also conceivable that the movement is caused through cooperation with a stopper or like element in one of said components during a movement of the transportation unit relative to such a component.

In another embodiment according to the invention, the holding means of the transportation units comprise a number of pairs of opposed, cooperating endless belts for there between holding a number of cut flowers, which belts can be driven for, at one end, there between receiving cut flowers and/or for, at an opposite end, discharging cut flowers.

The belts may move continuously, for example when the transportation unit is moved into the harvesting apparatus for there between receiving the cut flowers present in the first buffer, or for discharging cut flowers at the processing unit.

In yet another embodiment according to the invention, the holding means of the transportation units comprise a number of cooperating inflatable elongate tubular members, which are inflatable for there between holding cut flowers and which are deflatable for there between receiving a cut flower or for releasing a previously held cut flower.

In one embodiment of the assembly according to the present invention the first buffer of the harvesting apparatus comprises a number of pairs of opposed, cooperating endless belts for there between holding a number of cut flowers, which belts can be driven for, at one end, there between receiving cut flowers and/or for, at an opposite end, discharging cut flowers.

The cooperating belts may move stepwise for, at the one end, receiving freshly harvested flowers and positioning these at a defined spacing between cooperating belts, but also may move continuously (for example when the cut flowers present between the belts of the first buffer are engaged by the holding means of the transportation unit and latter is moved towards the transfer vehicle).

In one embodiment according to the invention, each harvesting apparatus is adapted for, during its movement over the selected one of the cultivation beds, progressively depositing a guide member on the ground, wherein the respective transfer vehicle is adapted for using said guide member for determining its path over the cultivation bed between the harvesting apparatus and a transportation vehicle and vice versa.

For example said guide member may be at least one elongate member creating an electromagnetic field, wherein the transfer vehicle comprises sensor means for registration of said electro-magnetic field. Based upon the sensed field a control logic of the transfer vehicle may control drive means for moving the transfer vehicle over the cultivation bed.

In alternative embodiments according to the present invention, the transfer vehicle is provided with GPS means or a laser guide assembly for determining its path over the cultivation bed between the harvesting apparatus and a transportation vehicle and vice versa.

Preferably the harvesting apparatus and/or each transfer vehicle is a caterpillar driven vehicle. This allows the transfer vehicle to move easily over the surface of the cultivation bed which often is very uneven, slippery and bumpy.

As alternatives wheel sets or wheels cooperating with tubular guides may be used.

In one embodiment according to the invention, the transportation vehicles for following the endless path are adapted for cooperating with members incorporated in said path and creating an electro-magnetic field. Basically such a manner of guiding a vehicle is known and it offers a very versatile system in which the track followed by a vehicle may be changed depending on the circumstances.

In one embodiment according to the invention, the second buffer comprises a rack for receiving and supporting at least one transportation unit, and preferably a number of transportation units. The capability of receiving a large amount of transportation units allows a longer disruption of the supply of cut flowers by the transportation vehicles without the need for the processing unit to stop its operation.

Hereinafter the invention will be elucidated while referring to the drawings, in which:
Figure 1 illustrates a schematic plan view of an embodiment of the assembly;
Figure 2 illustrates a schematic side elevational view of part of the assembly;
Figure 3 schematically shows a detail of a first buffer, and
Figures 4-6 schematically illustrate details of different embodiments of a transportation unit.

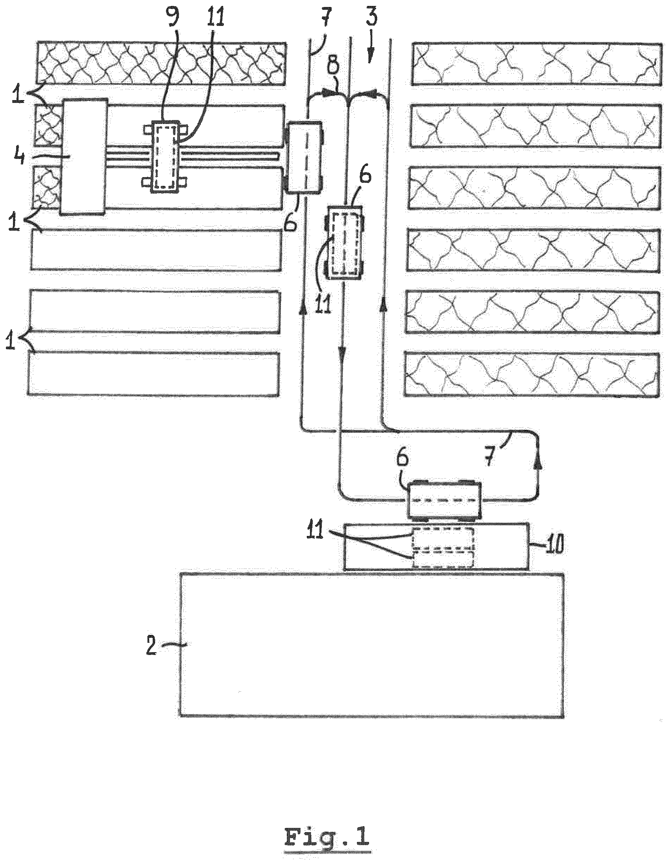

Firstly referring to figure 1 a schematic plan view (or general lay-out) of an embodiment of the assembly for transferring cut flowers from cultivation beds 1 towards a processing unit 2 is illustrated. The cultivation beds 1, as is common in greenhouses, are arranged in a defined pattern with a central pathway 3. In figure 1 the three lower left cultivation beds 1 already have been picked, whereas the two beds there above are in the process of being picked (whereas the remaining cultivation beds still are filled with flowers to be picked or harvested).

The assembly firstly comprises at least one harvesting apparatus 4 for moving over, and harvesting the cut flowers from a selected one (or, as illustrated, from two - or more- adjacent ones) of the cultivation beds 1. The harvesting apparatus 4, as will appear later, is provided with a first buffer 5 for temporarily buffering harvested cut flowers. Although figure 1 shows only one harvesting apparatus 4, there also may be provided more than one harvesting apparatus at different locations.

The assembly further comprises at least one transportation vehicle 6 for transporting cut flowers and adapted for following an endless path 7 extending along the pathway 3 between the cultivation beds 1 and the processing unit 2 (for example for cutting to size, defoliating, bundling and wrapping the cut flowers).

For following the endless path 7 the transportation vehicles 6 may be adapted for cooperating with members incorporated in said path 7 and creating an electromagnetic field. The constructive features of such a system are known per se and its details and components required for its operation are not discussed here. It is noted only that such a system is very versatile and that it allows the trajectory followed by a transportation vehicle 6 to be changed as required, for example using switch sections 8, such that the distance a transportation vehicle 6 has to travel can be minimised.

Further the assembly comprises for each harvesting apparatus 4 a transfer vehicle 9 adapted for moving along a path over a respective cultivation bed 1 for transferring cut flowers from the first buffer 5 of the harvesting apparatus 4 towards a transportation vehicle 6. The details of such a transfer vehicle 9 will be discussed below.

The assembly also comprises a second buffer 10 positioned between the endless path 7 and the processing unit 2. This second buffer 10 may comprise a rack which is adapted for receiving cut flowers from a transportation vehicle 6 and for temporarily buffering said received cut flowers and thereafter offering the cut flowers to the processing unit 2 for further processing. The transfer of cut flowers from the second buffer 10 to the processing unit 2 may occur by means (not shown) incorporated in the second buffer 10 and/or incorporated in the processing unit 2. The same may apply for the transfer of cut flowers from the transportation vehicles 6 to the second buffer 10.

Finally, the assembly comprises a number of separate transportation units 11 for cut flowers. As will appear below, each transportation unit comprises a frame 12 and a number holding means intended for engaging and holding cut flowers. In the embodiment of the assembly illustrated in figure 1 each transportation vehicle 6, the transfer vehicle 9, the harvesting apparatus 4 and the second buffer 10 are adapted for receiving said transportation units for transporting and buffering and/or buffering the cut.

In another embodiment not illustrated only the transfer vehicles 6 and second buffer 10 are adapted for receiving such transportation units 11.

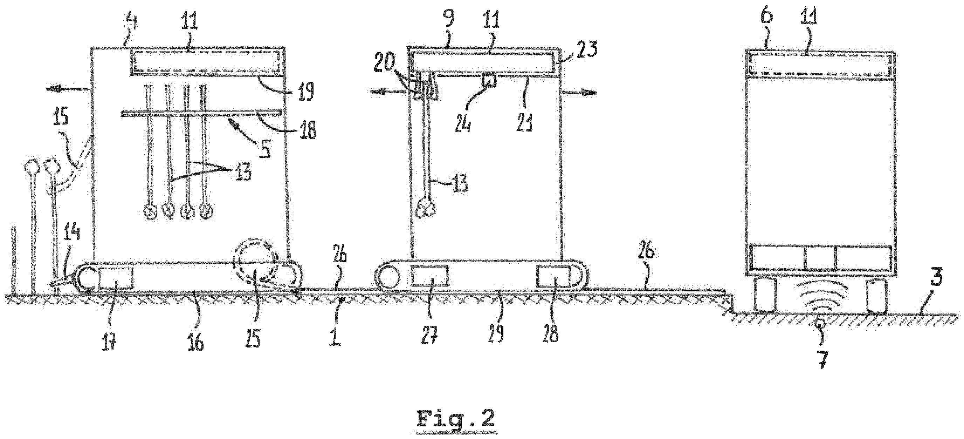

Referring to figure 2 (which shows a harvesting apparatus 4, transfer vehicle 9 and transportation vehicle 6 in a side elevational view) it appears that the harvesting apparatus 4 may comprise caterpillars 16 with respective drive 17 for moving over a cultivation bed 1. In an alternative embodiment wheels or wheel sets (not illustrated) may be used. The harvesting apparatus further is provided with the first buffer 5. Picked cut flowers 13 (after being cut by a cutting member 14 and being displaced by a manipulation member 15) are stored in the first buffer 5.

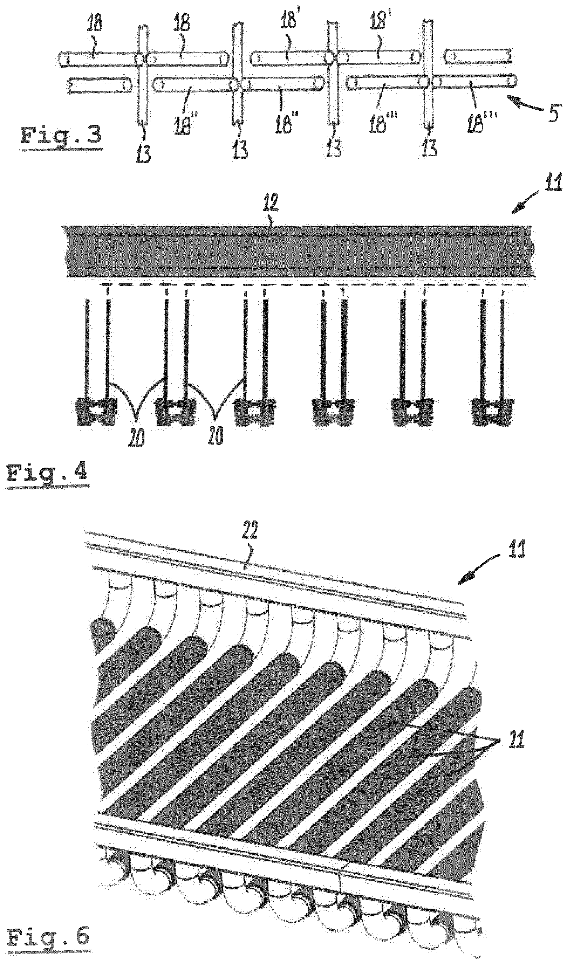

In figure 3 a detail of the first buffer 5 is illustrated. In the illustrated embodiment the first buffer of the harvesting apparatus comprises a number of pairs of opposed, cooperating endless belts 18, 18', 18", 18"' for there between holding a number of cut flowers 13, which belts can be driven for, at one end, there between receiving cut flowers 13 and/or for, at an opposite end, discharging cut flowers. In this case the pairs of belts are positioned in a staggered manner in two different levels for increasing the capacity of the buffer 5. Cooperating belts 18 or 18' of a first level clamp a cut flower 13 there between and such a flower can extend through a gap between adjacent pairs of belts 18" or 18"' in the second level and vice versa.

The harvesting apparatus 4 comprises a receptacle 19 for receiving a transportation unit 11 above the first buffer 5. In such a position the transportation unit 11 can take over the cut flowers 13 from the first buffer 5. For this, the first buffer 5 of the harvesting apparatus and the holding means of the transportation units 11 are adapted for buffering and holding, respectively, the cut flowers in a corresponding pattern.

It is conceivable that a transportation unit 11 likewise is provided with pairs of cooperating belts as shown, for example, in figure 3 (which belts then could be driven for, at one end thereof, there between receiving cut flowers and/or for, at an opposite end thereof, discharging cut flowers). However, figures 4 and 5 illustrate an embodiment of a transportation unit comprising a large number of pairs of opposed, cooperating grippers 20 which are movable between a holding position for there between holding (or gripping) a cut flower 13 and a release position for allowing a flower to be positioned between the grippers or for releasing a previously held cut flower.

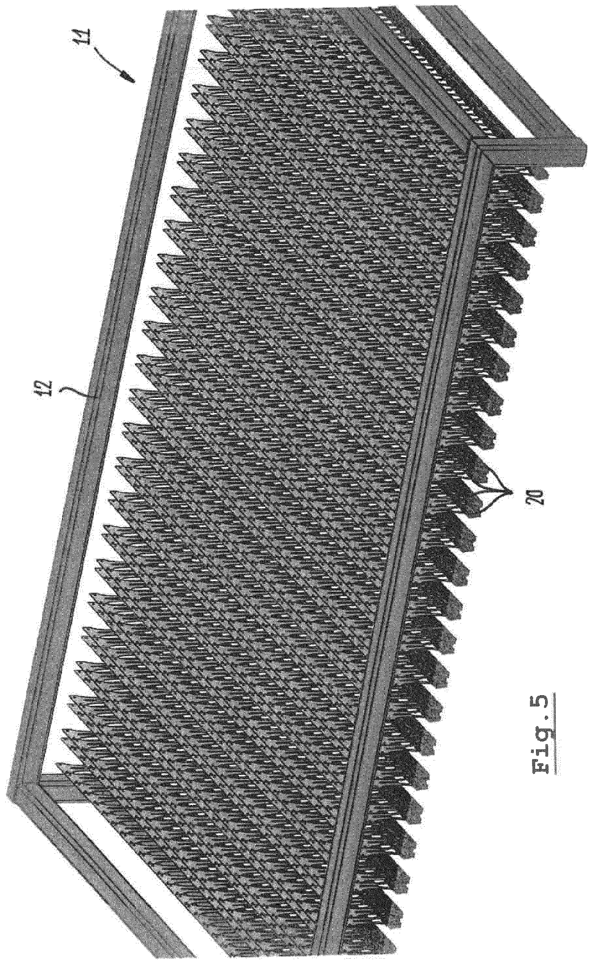

Figure 6 shows yet an alternative embodiment of the transportation unit wherein the holding means comprise a number of cooperating inflatable elongate tubular members 21 connected to a manifold 22 which are inflatable for there between holding cut flowers and which are deflatable for there between receiving/positioning cut flowers or for releasing previously held cut flowers.

The transfer vehicle 9 as illustrated in figure 2 likewise is provided with a receptacle 23 for a transportation unit 11. A drive member 24 may be provided for moving the transportation unit 11 with grippers 20 in and out of the transfer vehicle (both towards and away from the harvesting apparatus 4 and towards and away from the transportation vehicle 6). As an alternative such a drive member also may be part of the transportation unit 11, or of the harvesting apparatus or of the transportation vehicle 6.

It is noted that the grippers 20 only have been illustrated schematically in figure 2 in an orientation for clearly showing the cooperation there between for holding a cut flower 13, but that in general their specific orientation will differ from the illustrated one (specifically rotated over 90 degrees around a vertical axis).

Each harvesting apparatus 4 comprises a reel 25 which is adapted for, during the movement of the harvesting apparatus over the selected one of the cultivation beds 1, progressively depositing a guide member 26 on the ground. The transfer vehicle 9 in such a case is adapted for using said guide member 26 for determining its path over the cultivation bed 1 between the harvesting apparatus 4 and a transportation vehicle 6 and vice versa. In one embodiment said guide member 26 is an elongate member creating an electromagnetic field, wherein the transfer vehicle 9 comprises sensor means 27 for registration of said electro-magnetic field and, through a logic, providing control signals for a drive 28 (for example for driving caterpillars 29 or wheels (not illustrated)).

In alternative embodiments the transfer vehicle 9 may be provided with GPS means or a laser guide assembly for determining its path over the cultivation bed 1 between the harvesting apparatus 4 and a transportation vehicle 6 and vice versa.

When the harvesting apparatus 4 is harvesting (picking/cutting) flowers 13 from the cultivation bed 1, these flowers are temporarily stored in its first buffer 5. A transportation vehicle 6 will bring an empty transportation unit 11 from the second buffer 10 (or from any other appropriate location) to the respective cultivation bed 1 where the harvesting apparatus is operative. There the transfer vehicle 9 (while being in a position close to the central pathway 3) will take over this empty transportation unit 11 and will bring it to the harvesting apparatus.

Once the transportation unit is in the harvesting apparatus (or during being moved therein), the cut flowers 13 are released by the first buffer 5 and gripped by the holding means of the transportation unit which then again is moved over to the transfer vehicle 9.

It is possible that transferring the flowers from the first buffer 5 to the transportation unit 11 does not occur before the first buffer 5 has reached a certain filling degree.

The transfer vehicle 9 then will bring the transportation unit to the transportation vehicle 6 (this may or may not be the same transportation vehicle that has supplied the empty transportation unit 11) which then follows the path 7 towards the second buffer 10 for there transferring the transportation unit 11 to the second buffer.

When the assembly comprises multiple transportation vehicles 6 cooperating with multiple transfer vehicles 9 a logic of the assembly will be adapted to control the movement of the transportation vehicles along the endless path in an optimal manner. The options are numerous. For example a transportation vehicle 6 could bring an empty transportation unit 11 to one transfer vehicle 9 and take up another, filled, transportation unit 11 from another transfer vehicle. As an alternative a transportation vehicle can wait to again take up the same transportation unit as delivered previously. The lay-out of the endless path 7 can be varied widely and there may be single or multiple paths.

The invention is not limited to the embodiments described above which may be varied widely within the scope of the invention as defined by the appending claims.

## Claims

1. Assembly for transferring cut flowers (13) from cultivation beds (1) towards a processing unit (2), comprising: - at least one harvesting apparatus (4) for moving over, and harvesting the cut flowers (13) from a selected one of the cultivation beds (1), which harvesting apparatus is provided with a first buffer (5) for temporarily buffering harvested cut flowers; - at least one transportation vehicle (6) for transporting cut flowers and adapted for following an endless path (7) between the cultivation beds (1) and the processing unit (2) ; - for each harvesting apparatus (4) a transfer vehicle (9) adapted for moving along a path over a respective cultivation bed (1) for transferring cut flowers from the first buffer (5) of the harvesting apparatus (4) towards a transportation vehicle (6); - a second buffer (10) positioned between the endless path (7) and the processing unit (2), adapted for receiving cut flowers from a transportation vehicle (6) and for temporarily buffering said received cut flowers and thereafter offering the cut flowers to the processing unit; - a number of separate transportation units (11) for cut flowers (13), each comprising a frame (12) and a number of holding means (18,20,21) intended for engaging and holding cut flowers, wherein at least each transportation vehicle (6) and the second buffer (10) are adapted for transporting and buffering, respectively, the cut flowers (13) by means of at least one transportation unit (11).

2. Assembly according to claim 1, wherein each transfer vehicle (9) is adapted for transferring the cut flowers (13) by means of a transportation unit (11), wherein the harvesting apparatus (4) is adapted for receiving the transportation unit (11) and wherein the first buffer (5) of the harvesting apparatus (4) and the holding means (18,20,21) of the transportation units (11) are adapted for buffering and holding, respectively, the cut flowers in a corresponding pattern.

3. Assembly according to claim 1 or 2, wherein the holding means of the transportation units (11) comprise a number of pairs of opposed, cooperating grippers (20) which are movable between a holding position for there between holding a cut flower (13) and a release position for there between receiving a cut flower or for releasing a previously held cut flower.

4. Assembly according to claim 1 or 2, wherein the holding means of the transportation units (11) comprise a number of pairs of opposed, cooperating endless belts (18) for there between holding a number of cut flowers (13), which belts (18) can be driven for, at one end, there between receiving cut flowers and/or for, at an opposite end, discharging cut flowers.

5. Assembly according to claim 1 or 2, wherein the holding means of the transportation units (11) comprise a number of cooperating inflatable elongate tubular members (21), which are inflatable for there between holding cut flowers (13) and which are deflatable for there between receiving a cut flower or for releasing a previously held cut flower.

6. Assembly according to any of the previous claims, wherein the first buffer (5) of the harvesting apparatus (4) comprises a number of pairs of opposed, cooperating endless belts (18) for there between holding a number of cut flowers (13), which belts can be driven for, at one end, there between receiving cut flowers and/or for, at an opposite end, discharging cut flowers.

7. Assembly according to any of the previous claims, wherein each harvesting apparatus (4) is adapted for, during its movement over the selected one of the cultivation beds (1), progressively depositing a guide member (26) on the ground and wherein the respective transfer vehicle (9) is adapted for using said guide member for determining its path over the cultivation bed between the harvesting apparatus (4) and a transportation vehicle (6) and vice versa.

8. Assembly according to claim 7, wherein the guide member (26) is at least one elongate member creating an electromagnetic field and wherein the transfer vehicle (9) comprises sensor means (27) for registration of said electromagnetic field.

9. Assembly according to any of the claims 1-6, wherein the transfer vehicle (9) is provided with GPS means or a laser guide assembly for determining its path over the cultivation bed (1) between the harvesting apparatus (4) and a transportation vehicle (6) and vice versa.

10. Assembly according to any of the previous claims, wherein the harvesting apparatus (4) and/or each transfer vehicle (9) is/are one of a caterpillar (16) driven vehicle, a vehicle with wheel sets or a vehicle comprising wheels for cooperation with tubular guides.

11. Assembly according to any of the previous claims, wherein the transportation vehicles (6) for following the endless path (7) are adapted for cooperating with members incorporated in said path and creating an electro-magnetic field.

12. Assembly according to any of the previous claims, wherein the second buffer (10) comprises a rack for receiving and supporting at least one transportation unit (11) .

## Patentansprüche

1. Einrichtung zum Übertragen von Schnittblumen (13) aus Kulturbeeten (1) in Richtung zu einer Verarbeitungseinheit (2), aufweisend:
- mindestens eine Erntevorrichtung (4) zum Bewegen über und Ernten der Schnittblumen (13) aus einem ausgewählten der Kulturbeete (1), wobei die Erntevorrichtung mit einem ersten Speicher (5) zum vorübergehenden Speichern von geernteten Schnittblumen versehen ist,
- mindestens ein Transportfahrzeug (6) zum Transportieren von Schnittblumen, und das angepasst ist, um einem Endlospfad (7) zwischen den Kulturbeeten (1) und der Verarbeitungseinheit (2) zu folgen,
- für jede Erntevorrichtung (4) ein Transferfahrzeug (9), das zum Bewegen entlang eines Weges über ein jeweiliges Kulturbeet (1) zum Übertragen von Schnittblumen aus dem ersten Speicher (5) der Erntevorrichtung (4) in Richtung zu einem Transportfahrzeug (6) angepasst ist,
- einen zweiten Speicher (10), der zwischen dem Endlospfad (7) und der Verarbeitungseinheit (2) angeordnet ist, der angepasst ist zum Aufnehmen von Schnittblumen von einem Transportfahrzeug (6) und zum vorübergehenden Speichern der aufgenommenen Schnittblumen und zum anschließenden Bereitstellen der Schnittblumen an die Verarbeitungseinheit,
- eine Anzahl von getrennten Transporteinheiten (11) für Schnittblumen (13), die jeweils einen Rahmen (12) und eine Anzahl von Haltemitteln (18, 20, 21) aufweisen, die zum Erfassen und Halten von Schnittblumen vorgesehen sind, wobei mindestens jedes Transportfahrzeug (6) und der zweite Speicher (10) zum Transportieren bzw. Speichern der Schnittblumen (13) mittels mindestens einer Transporteinheit (11) angepasst sind.

2. Einrichtung gemäß Anspruch 1, wobei jedes Transferfahrzeug (9) zum Übertragen der Schnittblumen (13) mittels einer Transporteinheit (11) angepasst ist, wobei die Erntevorrichtung (4) zum Aufnehmen der Transporteinheit (11) angepasst ist, und wobei der erste Speicher (5) der Erntevorrichtung (4) und die Haltemittel (18, 20, 21) der Transporteinheiten (11) zum Speichern bzw. Halten der Schnittblumen in einem entsprechenden Muster angepasst sind.

3. Einrichtung gemäß Anspruch 1 oder 2, wobei die Haltemittel der Transporteinheiten (11) eine Anzahl von Paaren von gegenüberliegenden, zusammenwirkenden Greifern (20) aufweisen, die zwischen einer Halteposition zum Halten einer Schnittblume (13) dazwischen und einer Freigabeposition zum Aufnehmen einer Schnittblume dazwischen oder zum Freigeben einer zuvor gehaltenen Schnittblume bewegbar sind.

4. Einrichtung gemäß Anspruch 1 oder 2, wobei die Haltemittel der Transporteinheiten (11) eine Anzahl von Paaren von gegenüberliegenden, zusammenwirkenden Endlosbändern (18) zum Halten einer Anzahl von Schnittblumen (13) dazwischen aufweisen, wobei die Bänder (18) angetrieben werden können, um an einem Ende dazwischen Schnittblumen aufzunehmen und/oder an einem entgegengesetzten Ende Schnittblumen zu entladen.

5. Einrichtung gemäß Anspruch 1 oder 2, wobei die Haltemittel der Transporteinheiten (11) eine Anzahl von zusammenwirkenden aufblasbaren langgestreckten Rohrelementen (21) aufweisen, die aufblasbar sind, um dazwischen Schnittblumen (13) zu halten, und aus denen Luft abgelassen werden kann, um dazwischen eine Schnittblume aufzunehmen oder um eine zuvor gehaltene Schnittblume freizugeben.

6. Einrichtung gemäß irgendeinem der vorhergehenden Ansprüche, wobei der erste Speicher (5) der Erntevorrichtung (4) eine Anzahl von Paaren von gegenüberliegenden, zusammenwirkenden Endlosbändern (18) aufweist, um dazwischen eine Anzahl von Schnittblumen (13) zu halten, wobei die Bänder angetrieben werden können, um an einem Ende dazwischen Schnittblumen aufzunehmen und/oder um an einem entgegengesetzten Ende Schnittblumen zu entladen.

7. Einrichtung gemäß irgendeinem der vorhergehenden Ansprüche, wobei jede Erntemaschine (4) angepasst ist, um während ihrer Bewegung über das ausgewählte der Kulturbeete (1) schrittweise ein Führungselement (26) auf dem Boden abzulegen, und wobei das jeweilige Transferfahrzeug (9) angepasst ist, um das Führungselement zum Bestimmen seines Weges über das Kulturbeet zwischen der Erntevorrichtung (4) und einem Transportfahrzeug (6) und umgekehrt zu verwenden.

8. Einrichtung gemäß Anspruch 7, wobei das Führungselement (26) mindestens ein langgestrecktes Element ist, das ein elektromagnetisches Feld erzeugt, und wobei das Transferfahrzeug Sensormittel (27) zum Registrieren des elektromagnetischen Feldes aufweist.

9. Einrichtung gemäß irgendeinem der Ansprüche 1 bis 6, wobei das Transferfahrzeug (9) mit GPS-Mitteln oder einer Laserführungseinrichtung zum Bestimmen seines Weges über das Kulturbeet (1) zwischen der Erntemaschine (4) und einem Transportfahrzeug (6) und umgekehrt versehen ist.

10. Einrichtung gemäß irgendeinem der vorhergehenden Ansprüche, wobei die Erntevorrichtung (4) und/oder jedes Transferfahrzeug (9) eines von einem Raupenfahrzeug- (16) -getriebenen Fahrzeug, einem Fahrzeug mit Radsätzen oder einem Fahrzeug mit Rädern zum Zusammenwirken mit Rohrführungen ist/ sind.

11. Einrichtung gemäß irgendeinem der vorhergehenden Ansprüche, wobei die Transportfahrzeuge (6) zum Folgen des Endlospfades (7) angepasst sind, um mit Elementen zusammenzuwirken, die in den Pfad integriert sind und ein elektromagnetisches Feld erzeugen.

12. Einrichtung gemäß irgendeinem der vorhergehenden Ansprüche, wobei der zweite Speicher (10) eine Ablage zum Aufnehmen und Abstützen von mindestens einer Transporteinheit (11) aufweist.

## Revendications

1. Ensemble pour transférer des fleurs coupées (13) depuis des lits de culture (1) vers une unité de traitement (2), comprenant : - au moins un appareil de récolte (4) pour se déplacer sur, et récolter les fleurs coupées (13) depuis un lit sélectionné des lits de culture (1), lequel appareil de récolte est pourvu d'un premier espace de stockage tampon (5) pour stocker temporairement des fleurs coupées récoltées ; - au moins un véhicule de transport (6) pour transporter des fleurs coupées et adapté pour suivre un chemin sans fin (7) entre les lits de culture (1) et l'unité de traitement (2) ; - pour chaque appareil de récolte (4) un véhicule de transfert (9) adapté pour se déplacer le long d'un chemin sur un lit de culture (1) respectif pour transférer des fleurs coupées depuis le premier espace de stockage tampon (5) de l'appareil de récolte (4) vers un véhicule de transport (6) ; - un second espace de stockage tampon (10) positionné entre le chemin sans fin (7) et l'unité de traitement (2), adapté pour recevoir des fleurs coupées en provenance d'un véhicule de transport (6) et pour stocker temporairement lesdites fleurs coupées reçues et offrir ensuite les fleurs coupées à l'unité de traitement ; - un nombre d'unités de transport séparées (11) pour des fleurs coupées (13), comprenant chacune un châssis (12) et un nombre de moyens de maintien (18, 20, 21) destinés à venir en contact avec des fleurs coupées et les maintenir, dans lequel au moins un véhicule de transport (6) et le second espace de stockage tampon (10) sont adaptés pour transporter et stocker temporairement, respectivement, les fleurs coupées (13) au moyen d'au moins une unité de transport (11).

2. Ensemble selon la revendication 1, dans lequel chaque véhicule de transfert (9) est adapté pour transférer les fleurs coupées (13) au moyen d'une unité de transport (11), dans lequel l'appareil de récolte (4) est adapté pour recevoir l'unité de transport (11) et dans lequel le premier espace de stockage tampon (5) de l'appareil de récolte (4) et les moyens de maintien (18, 20, 21) des unités de transport (11) sont adaptés pour stocker temporairement et maintenir, respectivement, les fleurs coupées dans une configuration correspondante.

3. Ensemble selon la revendication 1 ou 2, dans lequel les moyens de maintien des unités de transport (11) comprennent un nombre de paires d'organes de préhension coopérants opposés (20) qui sont mobiles entre une position de maintien pour maintenir entre eux une fleur coupée (13) et une position de libération pour recevoir entre eux une fleur coupée ou pour libérer une fleur coupée précédemment maintenue.

4. Ensemble selon la revendication 1 ou 2, dans lequel les moyens de maintien des unités de transport (11) comprennent un nombre de paires de courroies sans fin coopérantes opposées (18) pour maintenir entre elles un nombre de fleurs coupées (13), lesquelles courroies (18) peuvent être entraînées pour, au niveau d'une extrémité, recevoir entre elles des fleurs coupées et/ou pour, au niveau d'une extrémité opposée, évacuer des fleurs coupées.

5. Ensemble selon la revendication 1 ou 2, dans lequel les moyens de maintien des unités de transport (11) comprennent un nombre d'organes tubulaires allongés gonflables coopérants (21), qui sont gonflables pour maintenir entre eux des fleurs coupées (13) et qui sont dégonflables pour recevoir entre eux une fleur coupée ou pour libérer une fleur coupée précédemment maintenue.

6. Ensemble selon l'une quelconque des revendications précédentes, dans lequel le premier espace de stockage tampon (5) de l'appareil de récolte (4) comprend un nombre de paires de courroies sans fin coopérantes opposées (18) pour maintenir entre elles un nombre de fleurs coupées (13), lesquelles courroies peuvent être entraînées pour, au niveau d'une extrémité, recevoir entre elles des fleurs coupées et/ou pour, au niveau d'une extrémité opposée, évacuer des fleurs coupées.

7. Ensemble selon l'une quelconque des revendications précédentes, dans lequel chaque appareil de récolte (4) est adapté pour, pendant son déplacement sur le lit sélectionné des lits de culture (1), déposer progressivement un organe de guidage (26) sur le sol et dans lequel le véhicule de transfert (9) respectif est adapté pour utiliser ledit organe de guidage pour déterminer son chemin sur le lit de culture entre l'appareil de récolte (4) et un véhicule de transport (6) et vice versa.

8. Ensemble selon la revendication 7, dans lequel l'organe de guidage (26) est au moins un organe allongé créant un champ électromagnétique et dans lequel le véhicule de transfert (9) comprend des moyens de capteur (27) pour enregistrer ledit champ électromagnétique.

9. Ensemble selon l'une quelconque des revendications 1 à 6, dans lequel le véhicule de transfert (9) est pourvu de moyens GPS ou d'un ensemble de guidage laser pour déterminer son chemin sur le lit de culture (1) entre l'appareil de récolte (4) et un véhicule de transport (6) et vice versa.

10. Ensemble selon l'une quelconque des revendications précédentes, dans lequel l'appareil de récolte (4) et/ou chaque véhicule de transfert (9) sont l'un d'un véhicule entraîné par chenille (16), d'un véhicule avec des ensembles de roues ou d'un véhicule comprenant des roues pour coopérer avec des guides tubulaires.

11. Ensemble selon l'une quelconque des revendications précédentes, dans lequel les véhicules de transport (6) pour suivre le chemin sans fin (7) sont adaptés pour coopérer avec des organes incorporés dans ledit chemin et créer un champ électromagnétique.

12. Ensemble selon l'une quelconque des revendications précédentes, dans lequel le second espace de stockage tampon (10) comprend une grille pour recevoir et supporter au moins une unité de transport (11).
